# EUROPÄISCHE PATENTSCHRIFT

(11) **EP 0 743 498 B1**
(45) Veröffentlichungstag und Bekanntmachung des Hinweises auf die Patenterteilung: **23.01.2002**
(21) Anmeldenummer: 96107252.7
(22) Anmeldetag: 08.05.1996
(51) Int. Cl.: F26B 17/10, F26B 21/12, F26B 25/22

(54) **Verfahren zum Trocknen von feuchten Holzfasern**
Process for drying moist wood fibres
Procédé de séchage de fibres de bois humides

(30) Priorität: 16.05.1995 AT 82295
(43) Veröffentlichungstag der Anmeldung: 20.11.1996
(73) Patentinhaber: Andritz AG, 8045 Graz (AT)
(72) Erfinder: Lashofer, Wolfgang, 1170 Wien (AT)
(74) Vertreter: Schweinzer, Friedrich

(56) Entgegenhaltungen:
- AT-A- 398 485
- BE-A- 1 006 522
- DE-A- 3 125 235
- DE-A- 4 319 603
- DE-B- 1 164 325
- DE-B- 1 247 965
- FR-A- 1 143 159
- FR-A- 1 530 868
- GB-A- 484 939
- GB-A- 765 910
- US-A- 3 111 398
- US-A- 3 801 264

## Beschreibung

Die Erfindung betrifft ein Verfahren zum Trocknen von feuchten Holzfasern, bei dem die feuchten Holzfasern in einen Trocknungsgasstrom eingebracht, durch das Trocknungsgas pneumatisch durch eine längere Trocknungsstrecke gefördert und gleichzeitig getrocknet werden, wobei nachfolgend die getrockneten Holzfasern vom Trocknungsgas getrennt werden. Ein derartiges Verfahren ist aus der DE-B-1 247 965 bekannt.
Für die Trocknung von Fasern, insbesondere von Holzfasern zur Herstellung von mitteldichten Faserplatten, sind Verfahren und Anlagen bekannt, bei denen die Holzfasern in einen Heißluftstrom eingebracht und durch diesen über eine längere Strecke z.B. in einem Trocknerrohr gefördert und dabei gleichzeitig getrocknet werden. Ein dazu einsetzbarer Trockner ist z.B. aus der DE 1 247 965 B bekannt, von dem die Erfindung ausgeht. Weiters ist ein derartiger Trockner auch aus der AT 391.020 bekannt. Die WO -OS 98/11074 beschreibt ein Verfahren zur Trocknung und zur Regelung der Trocknungsluft hinsichtlich Temperatur und Druck. Zum Trocknen von Lack auf Autos wird hier die Ausblastemperatur und der Ausblasdruck nach den Ausblasdüsen gemessen und ein Signal zur Regelung der Luftmenge für die Ausblasdüsen abgeben. Die Regelung der Luftmenge bzw. des Druckes erfolgt hier durch Drosselaggregate, wobei ein erhöhter Energieverlust auftritt. Am Ende des Trocknerrohres für die Trocknung der Holzfasern befindet sich eine Abscheidevorrichtung, in Form von Zyklonen, in der das getrocknete Gut von der nun feuchten, abgekühlten Luft getrennt wird. Bei bisherigen Anlagen besteht das Problem, daß bei einer nicht schnell genug reagierenden Regelung der Wärmezufuhr ein Teil der durch den Ventilator geförderten Luftmenge im Bypass am Wärmetauscher vorbeigeführt werden muß. Dadurch erfolgt wiederum eine Abkühlung des Luftstromes, was hohe Energieverluste bedeutet.

Ein ähnliches Verfahren ist in der US 3,801,264 gezeigt. Hier wird das feuchte Gut in einen Trommeltrockner eingebracht und anschließend gemeinsam mit dem Trocknungsgas zum Zyklon geführt, in dem Gas und Gut getrennt werden. Bei diesem Dokument erfolgt die Regelung der Trocknungsluftmenge in Abhängigkeit der Feuchtigkeitsmenge im Eintritt. Die Feuchtigkeitsmenge ist aber kein Maß für die erreichbare/erreichte Endfeuchte.

Ziel der Erfindung ist es, ein Verfahren zur Trocknung von feuchtem Gut zu schaffen, bei dem die Energieverluste, insbesondere auch im Teillastbereich, reduziert werden.
Die Erfindung ist daher dadurch gekennzeichnet, daß die Menge des Trocknungsgases in Abhängigkeit der Holzfasermenge, und/oder der Endfeuchte der getrockneten Holzfasem geregelt wird. Durch die Regelung der Menge des feuchten Gutes läßt sich besonders günstig auf die sich oft stark ändernden Mengen des zu trocknenden Gutes reagieren. Es wird daher jeweils der optimale Energieeinsatz für einerseits die Wärmezufuhr und andererseits die Antriebsenergie des Förderaggregates, z.B. eines Ventilators, erreicht. Dies ermöglicht hohe Energieeinsparungen.
Eine Weiterbildung der Erfindung ist dadurch gekennzeichnet, daß die zugeführte Wärmemenge in Abhängigkeit der Endfeuchte der Holzfasern, geregelt wird. Durch diese Regelung kann in einfacher Weise die Qualität des Endproduktes auch bei schwankenden Eingangsbedingungen konstant gehalten werden.
Eine Ausgestaltung der Erfindung ist dadurch gekennzeichnet, daß als Trocknungsgas Rauchgas, Frischluft oder eine Mischung aus Rauchgas und Frischluft eingesetzt wird. Durch die Verwendung von Rauchgas kann die zur Zuführung der erforderlichen Energie zur Trocknung stark reduziert werden, wobei bei sehr hohen Rauchgastemperaturen Frischluft dazugemischt werden kann. Beim Anfahrbetrieb bzw. bei Stillstand des rauchgaserzeugenden Ofens kann der Trockner auch mit Frischluft betrieben werden. Bei Verwendung von Frischluft, die mittels eines Wärmetauschers aufgeheizt wird, wird durch die höhere Dichte als beim Rauchgas die benötigte Luftmenge bereits bei geringeren Drehzahlen des Ventilators erreicht, wodurch sich eine hohe Energieerspamis bei der Ventilatorantriebsleistung ergibt. Dies führt zu enormen Stromeinsparungen beim Betrieb mit Frischluft.
Eine günstige Ausgestaltung der Erfindung ist dadurch gekennzeichnet, daß die erforderliche Wärmemenge durch Dampf oder Thermoöl zugeführt wird.

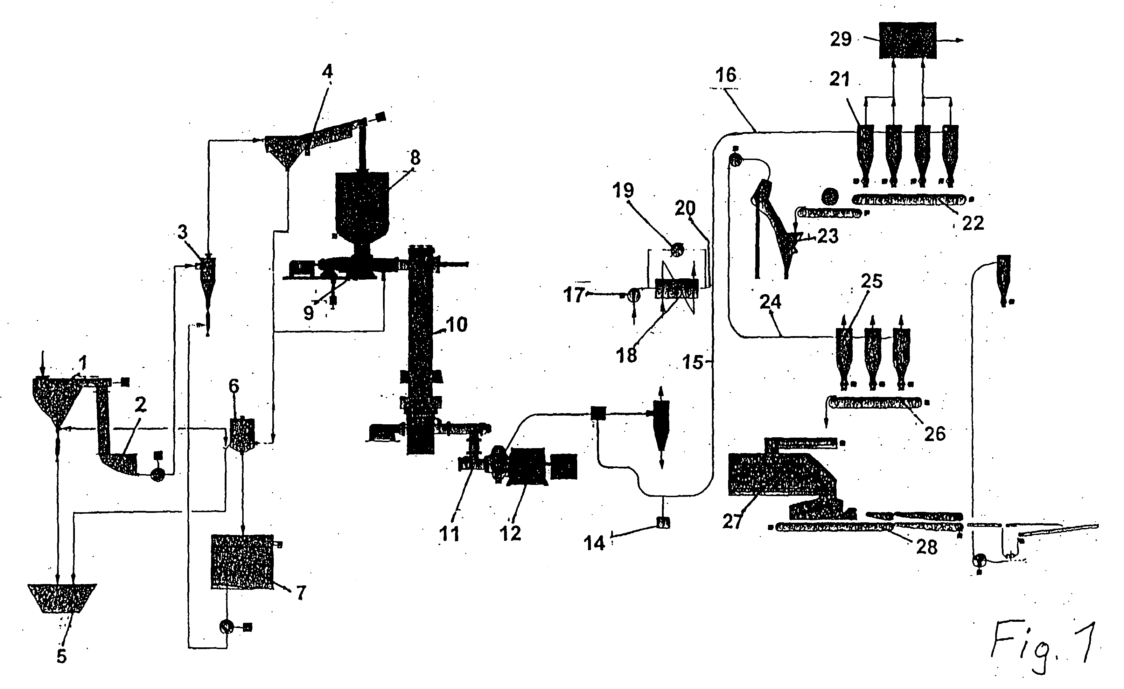

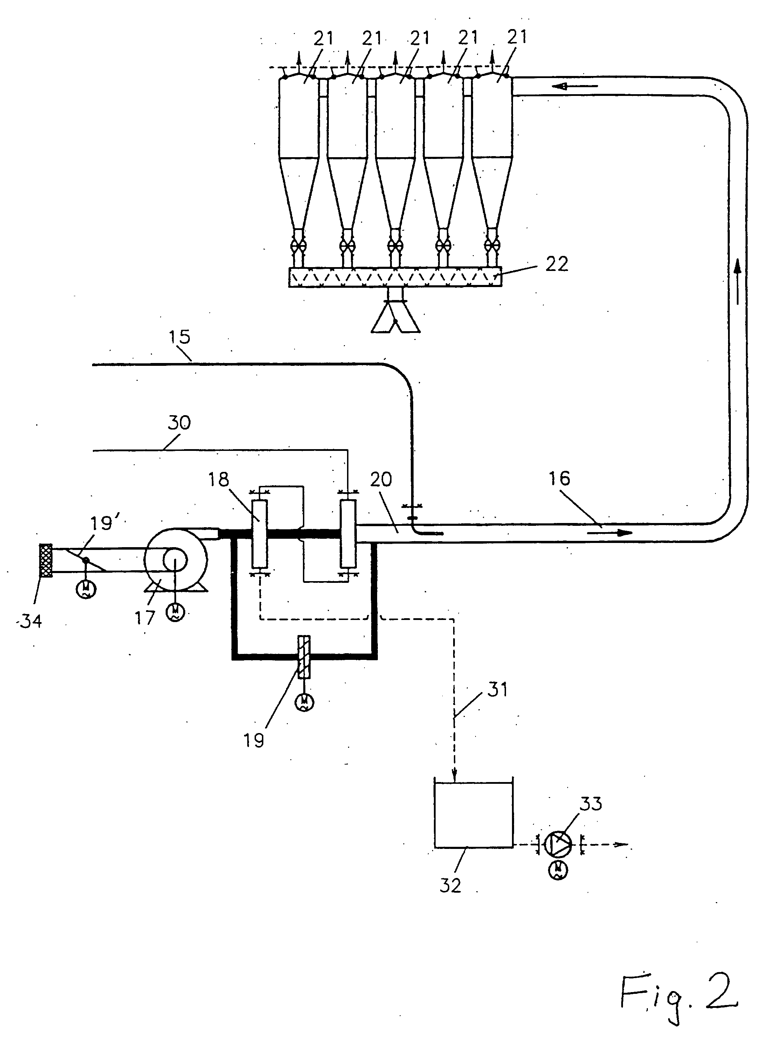

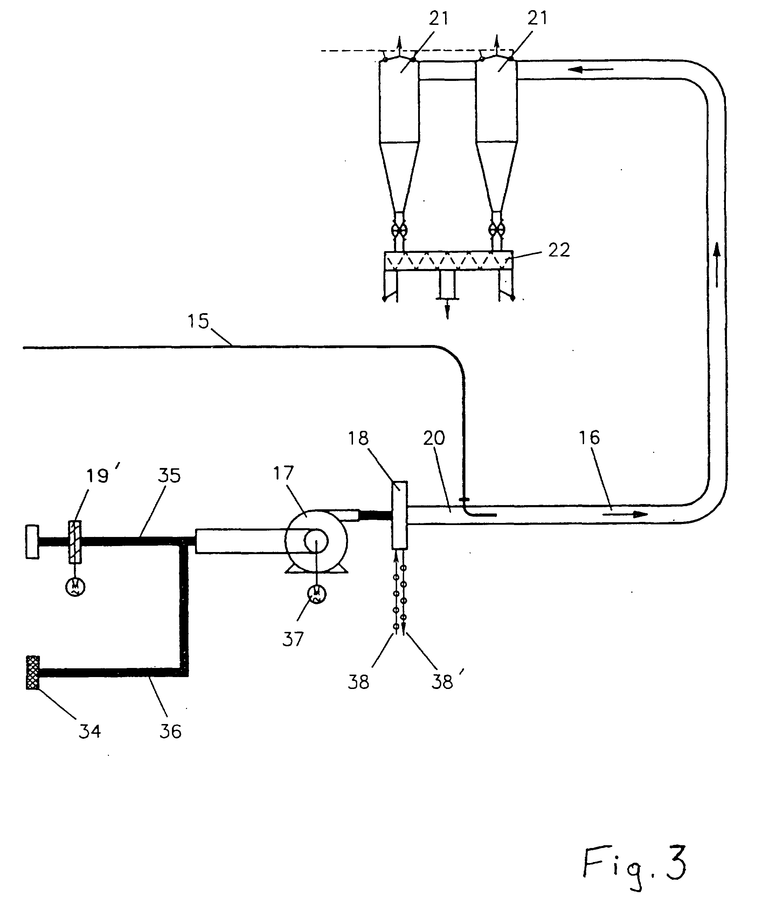

Die Erfindung wird nunmehr beispielhaft anhand von Zeichnungen erläutert, wobei
Fig. 1 ein Schema einer MDF-Faseraufbereitungsanlage, Fig. 2 eine Trocknungsanlage nach dem Stand der Technik, Fig. 3 eine Variante der Erfindung darstellt.
Fig.1 zeigt ein Schema einer MDF-Faseraufbereitungsanlage mit einer Hackschnitzel-wäsche, die aus einem Hackschnitzelwäscher 1, einer Hackschnitzelpumpe 2, einem Hackschnitzelzyklon 3, einer Entwässerungsschnecke 4, einem Rejectbehälter 5, einem Sieb 6 und einem Waschwassertank 7 samt zugeordneten Pumpen besteht. Anschließend an die Hackschnitzelwäsche werden die Hackschnitzel einer Druck-zerfaserungsanlage zugeführt. Dieser Teil der Anlage besteht aus einem Vordämpfbehälter 8 in dem die Hackschnitzel mit Dampf vorgewärmt werden, einer Stoffschnecke 9, die aus dem Vordämpfbehälter 8 kommenden Hackschnitzel in einen Kocher 10 führt. Die aus dem Kocher 10 kommenden Hackschnitzel werden mittels einer Einspeiseschnecke 11 einem Druckrefiner 12 zugeführt. In diesem Druckrefiner werden die Hackschnitzel zerfasert und durch den Energieeintrag ein Teil der Flüssigkeit der feuchten Hackschnitzel verdampft. Anschließend wird das Faser-Dampf-Gemisch durch die Blasleitung 15 einem Trockner, insbesondere einem Trocknerrohr 16 eines Strömungstrockners, zugeleitet. Die Beleimung der Fasern erfolgt durch Leimzugabe aus einem Behälter 14 in die Blasleitung 15 vor dem Trockner 16. Zur Trocknung wird erhitzte Luft verwendet, wobei diese über einen Ventilator 17, einem Wärmetauscher 18 zur Aufheizung auf die erforderliche Temperatur zugeführt und über eine Leitung 20 in den Trockner 16 eingeleitet wird. Zur Regelung und Anpassung an eine unterschiedliche Holzfaserdurchsatzmenge wird bei bekannten Anlagen eine Bypassleitung mit Ventil 19 zum Wärmetauscher 18 vorgesehen. In Zyklonen 21 wird die heiße und feuchte Trocknungsluft von den getrockneten Holzfasern abgetrennt. Die Holzfasern werden über Bänder 22, einem Sichter 23, von dort über ein Sichterrohr 24 einem Abscheider 25 und in weiterer Folge über ein Förderband 26, einem Faserbunker 27 und einem Formband 28 zugeführt. Von dort werden die Holzfasern der Hauptpresse zur Herstellung von Faserplatten zugeleitet. Die feuchte Trocknerabluft aus den Trocknerabscheidern 21 kann in einem Kondensator 29 niedergeschlagen und einer Wasseraufbereitung zugeführt werden, oder sie wird direkt von den Zyklonen 21 in die Atmosphäre, d.h. an die Umwelt, abgegeben.
Fig. 2 zeigt eine Trocknungsanlage nach dem Stand der Technik, wobei ein Ventilator 17 mit konstantem Antrieb, und ein Dampfwärmetauscher 18 zur Aufheizung der Luft vorgesehen sind. Der Dampf wird über eine Leitung 13 dem Wärmetauscher 18 zugeführt und das Kondensat über eine Kondensatleitung 31 in einen Kondensat-sammelbehälter 32 und von dort über eine Kondensatpumpe 33 abgeleitet. Die Frischluft wird über ein Frischluftfilter 34 angesaugt und mittels einer regelbaren Klappe 19' geregelt. Die Regelung der Temperatur und Feuchte der Holzfasern nach dem Trockner 16, d.h. vor Eintritt in die Abscheidezyklone 21, erfolgt durch eine Regelung der Dampfzufuhr an die Wärmetauscher 18. Bei großen Schwankungen erfolgt eine schnelle Anpassung der Temperatur durch Öffnen eines Bypassventils 19, wobei kühle Luft der aufgeheizten Luft beigemengt und somit die Temperatur der Trocknerluft herabgesetzt wird. Durch den konstanten Luftstrom treten insbesondere bei geringer Durchsatzleistung spezifisch hohe Energieverbräuche auf. Daraus ergibt sich ein sehr uneffizienter Betrieb der Anlage.
Fig. 3 zeigt nun eine Variante der Trocknungsanlage zum Ausführen des Verfahrens gemäß der Erfindung, wobei hier zur Beheizung des Trockners Rauchgas verwendet wird. Das Rauchgas wird über eine Leitung 35 vom Ventilator 17 angesaugt. Gleichzeitig wird über ein Luftfilter 34 und eine Leitung 36 Frischluft angesaugt. Zur Regelung des Verhältnisses von Rauchgas und Frischluft wird eine Drosselklappe 19' im Rauchgasstrom 35 verwendet. Der Ventilator 17 ist hier mit einem regelbaren Antrieb 37 versehen, wobei der Antrieb entweder ein frequenzgesteuerter Drehstrommotor oder ein Gleichstrommotor sein kann. Dem Ventilator nachgeschaltet ist ein Wärmetauscher 18, der mit einem Thermoöleintritt 38 und einem Thermoölaustritt 38' versehen ist. Durch diese Schaltungsweise kann z.B. im Anfahrbetrieb Frischluft verwendet und im Wärmetauscher 18 auf die erforderliche Temperatur aufgeheizt werden. Durch die Verwendung eines regelbaren Antriebs läßt sich auch der Motor 37 des Ventilators 17 unproblematisch starten und ergibt einen sanften Anlauf mit geringen Stromspitzen. In weiterer Folge kann dann Rauchgas verwendet werden, wodurch sich der Wärmebedarf, der durch das Thermoöl gedeckt werden muß, wesentlich verringert. Die Regelung der Temperatur und Feuchte der Holzfasern am Ende des Trockners 16 kann nun in einfacher Weise durch die Anpassung der Luftmenge an den Bedarf erfolgen. Dadurch kann auch die Luftmenge an den Anlagendurchsatz angepaßt werden, wodurch eine entsprechende Energieeinsparung durch eine geringere benötigte Antriebsleistung sowie eine geringere benötigte Wärmeenergie erfolgen. Weiters bringt dieses Konzept den Vorteil, daß auch bei gleicher benötigter Luftmenge der Einfluß der Dichte zwischen heißem Rauchgas (z.B. 350°C) und Frischluft berücksichtigt werden kann.
Bei Anlagen mit großen benötigten Luftmengen und starker Änderung des Luftmengen-bedarfs bedingt durch die Produktionsmengen, bei denen bisher zwei parallel geschaltete Ventilatoren verwendet wurden, kann nun nur ein großer Ventilator eingesetzt werden. Dadurch werden die Investitionskosten wesentlich veringert, wobei Luftmengen und damit der Energieverbrauch noch besser geregelt werden können.

Das Verfahren ist nicht auf die angeführten Beispiele beschränkt.

## Patentansprüche

1. Verfahren zum Trocknen von feuchten Holzfasern, bei dem die feuchten Holzfasern in einen Trocknungsgasstrom eingebracht, durch das Trocknungsgas pneumatisch durch eine längere Trocknungsstrecke gefördert und gleichzeitig getrocknet werden, wobei nachfolgend die getrockneten Holzfasem vom Trocknungsgas getrennt werden, **dadurch gekennzeichnet, daß** die Menge des Trocknungsgases in Abhängigkeit der Holzfasermenge, und/oder der Endfeuchte der getrockneten Holzfasern geregelt wird.

2. Verfahren nach Anspruch 1, **dadurch gekennzeichnet, daß** die zugeführte Wärme- und menge in Abhängigkeit der Endfeuchte Trocknungsgas der Holzfasern, geregelt wird.

3. Verfahren nach Anspruch 1 oder 2, **dadurch gekennzeichnet, daß** als Trocknungsgas Rauchgas eingesetzt wird.

4. Verfahren nach Anspruch 1 oder 2, **dadurch gekennzeichnet, daß** als Trocknungsgas Frischluft eingesetzt wird.

5. Verfahren nach Anspruch 1 oder 2, **dadurch gekennzeichnet, daß** als Trocknungsgas eine Mischung aus Rauchgas und Frischluft eingesetzt wird.

6. Verfahren nach einem der Ansprüche 2 bis 5, **dadurch gekennzeichnet, daß** die erforderliche Wärmemenge durch Dampf zugeführt wird.

7. Verfahren nach einem der Ansprüche 2 bis 5, **dadurch gekennzeichnet, daß** die erforderliche Wärmemenge durch einen Gasbrenner zugeführt wird.

8. Verfahren nach einem der Ansprüche 2 bis 5, **dadurch gekennzeichnet, daß** die erforderliche Wärmemenge durch ein Thermoöl zugeführt wird.

## Claims

1. Process for drying moist wood fibres, where the moist fibres are fed to a drying gas stream, pneumatically conveyed by the drying gas through a fairly long drying section and dried at the same time, whereupon the dried wood fibres are separated from the drying gas, **characterized by** the quantity of drying gas being controlled in relation to the wood fibre quantity and/or final moisture of the dried wood fibres.

2. Process according to Claim 1, **characterized by** the heat and drying gas feed quantity being controlled in relation to the final moisture of the wood fibres.

3. Process according to Claim 1 or 2, **characterized by** flue gas being used as drying gas.

4. Process according to one of the Claims 1 or 2, **characterized by** fresh air being used as drying gas.

5. Process according to Claim 1 or 2, **characterized by** a mixture of flue gas and fresh air being used as drying gas.

6. Process according to Claim 2 to 5, **characterized by** the required heat quantity being supplied by steam.

7. Process according to one of the Claims 2 to 5, **characterized by** the required heat quantity being supplied by a gas burner.

8. Process according to one of the Claims 2 to 5, **characterized by** the required heat quantity being supplied by thermal oil.

## Revendications

1. Procédé de séchage de fibres de bois humides, dans lequel les fibres sont alimentées dans un courant de gaz séchant, transportées pneumatiquement à travers une section de séchage assez longue par le gaz de séchage et séchées en même temps, les fibres de bois séchées étant par la suite séparées du gaz de séchage, **caractérisé en ce que** la quantité de gaz de séchage est réglée en fonction de la quantité des fibres de bois et/ou l'humidité définitive des fibres de bois séchées.

2. Procédé selon la revendication 1, **caractérisé en ce que** la quantité de chaleur et de gaz de séchage alimentée est réglée en fonction de l'humidité définitive des fibres de bois.

3. Procédé selon la revendication 1 ou 2, **caractérisé en ce que** du gaz brûlé est utilisé comme gaz de séchage .

4. Procédé selon la revendication 1 ou 2, **caractérisé en ce que** de l'air frais est utilisé comme gaz de séchage.

5. Procédé selon la revendication 1 ou 2, **caractérisé en ce qu'**un mélange de gaz brûlé et d'air frais est utilisé comme gaz de séchage.

6. Procédé selon l'une des revendications 2 à 5, **caractérisé en ce que** la quantité de chaleur nécessaire est alimentée par de la vapeur.

7. Procédé selon l'une des revendications 2 à 5, **caractérisé en ce que** la quantité de chaleur nécessaire est alimentée par un brûleur à gaz.

8. Procédé selon l'une des revendications 2 à 5, **caractérisé en ce que** la quantité de chaleur nécessaire est alimentée par de l'huile thermique.
